# EUROPÄISCHE PATENTSCHRIFT

(11) **EP 2 732 196 B1**
(45) Veröffentlichungstag und Bekanntmachung des Hinweises auf die Patenterteilung: **01.03.2017**
(21) Anmeldenummer: 12712948.4
(22) Anmeldetag: 28.03.2012
(51) Int. Cl.: F16L 59/14, F16L 59/15, F16L 59/153, B29C 63/18, B29C 63/06, B29L 23/18, B29L 23/00

(54) **VERFAHREN ZUR HERSTELLUNG EINES WÄRMEGEDÄMMTEN ROHRES, VORRICHTUNG ZUR DURCHFÜHRUNG DES VERFAHRENS UND NACH DEM VERFAHREN HERGESTELLTES ROHR**
METHOD FOR PRODUCING A THERMALLY INSULATED PIPE, DEVICE FOR CARRYING OUT THE METHOD, AND PIPE PRODUCED ACCORDING TO THE METHOD
PROCÉDÉ DE PRODUCTION D'UN TUYAU CALORIFUGÉ, DISPOSITIF POUR LA MISE EN OEUVRE DE CE PROCÉDÉ ET TUYAU OBTENU SELON CE PROCÉDÉ

(30) Priorität: 15.07.2011 DE 102011051862
(43) Veröffentlichungstag der Anmeldung: 21.05.2014
(73) Patentinhaber: Rehau AG + Co, 95111 Rehau (DE)
(72) Erfinder: KANIA, Guido, 91080 Marloffstein (DE); MEYER, Michael, 85072 Eichstätt (DE)
(86) Internationale Anmeldenummer: PCT/EP2012/001340
(87) Internationale Veröffentlichungsnummer: WO 2013/010598

(56) Entgegenhaltungen:
- EP-A1- 2 442 003
- DE-A1- 3 308 396
- DE-A1- 3 635 515
- DE-U1-202008 013 488
- JP-A- 1 040 791
- JP-A- 56 117 626
- US-A- 4 351 366
- US-A1- 2011 139 289

## Beschreibung

Die Erfindung betrifft ein Verfahren zur Herstellung eines wärmegedämmten Rohres, weiter eine Vorrichtung zur Durchführung des Verfahrens, sowie ein nach dem Verfahren hergestelltes wärmegedämmtes Rohr.

Wärmegedämmte Rohre finden einen breiten Einsatz bei der Leitung eines Wärmeträgerfluids beispielsweise zwischen einem Heizkraftwerk und einem Verbraucher, meist einer Wohnanlage oder öffentlichen Gebäuden.

Diese wärmegedämmten Rohre werden teilweise über weite Strecken verlegt, weshalb hohe Anforderungen an die Wärmedämmung, die Dauerhaftigkeit und die mechanische / thermische Beanspruchung eines solchen wärmegedämmten Rohres gestellt werden.

Aus dem Stand der Technik sind wärmegedämmte Rohre in Form von vorisolierten Fernwärmerohren bekannt, die ein Mediumrohr, eine PUR-Schaumdämmung (PUR = Polyurethan) und einen PE-Außenmantel (PE = Polyethylen) aufweisen.

Wärmegedämmte Rohre, bei denen die Wärmedämmschicht aus PUR-Schaum besteht, erweisen sich in der Praxis aufgrund dieses verwendeten Hartschaumes als sehr biegesteif. Die Verlegbarkeit in engen Rohrgräben und bei kleinen Biegeradien ist dementsprechend schwierig. Zudem ist der verwendete PUR-Schaum anfällig bezüglich der Durchfeuchtung. Die Durchfeuchtung kann beispielsweise stattfinden durch eine Diffusion von Wasserdampf aus dem Mediumrohr in die Wärmedämmschicht bzw. durch undichte Muffenverbindungen bei Verlegung solcher wärmegedämmter Rohre im Grundwasser.

Weiterhin ist die als Folge der Durchfeuchtung eintretende Hydrolyse des PUR-Materials problematisch. Beide PUR-materialbedingte Schwächen führen zu einer Reduzierung des Wärmedämmverhaltens der wärmegedämmten Rohre im Langzeitbetrieb.

Weiterhin sind bei den wärmegedämmten Rohren so genannten Gleitsysteme bekannt, bei denen ein PE-X-Mediumrohr (PE-X = vernetztes Polyethylen) mit mehreren Schaumlagen isoliert ist und dieses Schaumpaket anschließend in ein vorgefertigtes flexibles Wellrohr eingezogen wird.

Derartige Gleitsysteme zeichnen sich durch eine hohe Flexibilität aufgrund der verwendeten flexiblen PE-X-Schaumplatten in Verbindung mit einem gewellten Außenrohr aus. Das dünnwandige gewellte Außenrohr weist jedoch, um eine ausreichende Flexibilität zu bieten, sehr geringe Wanddicken auf. Häufig werden deshalb auch Wellrohre ohne Inliner eingesetzt. Bei der üblichen Verlegung im Erdreich kann es aufgrund von Steinen in der Leitungszone oder durch das Handling auf der Baustelle dazu kommen, dass der dünne Wellrohraußenmantel beschädigt bzw. durchstoßen wird. Liegt die isolierte Leitung im Grundwasser, so dringt das Wasser an der durchstoßenen Außenwand in den Rohrverbund ein, verteilt sich längs der Rohrachse auf der gesamten Rohrlänge und zwischen den einzelnen Isolierstofflagen. Als Folge bricht die Isolierwirkung des durchnässten Rohrverbundes zusammen. Eine Sanierung kann nur durch Austausch der gesamten Rohrleitung erfolgen.

Aus dem Stand der Technik ist ein flexibles wärmegedämmtes Rohr gemäß der DE 20 2008 013 488 U1 bekannt, das eine Wellenstruktur aufweist, womit eine hohe Flexibilität
bei gleichzeitig guter Ringsteifigkeit des Rohres erreicht wird.

Die Druckschrift JP 1 040791 A betrifft ein Verfahren zur Herstellung eines wärmegedämmten Rohres mit einer eingeschnürten äußeren Oberfläche der Wärmedämmschicht.

Aus der Druckschrift JP 56 117626 A geht die Herstellung eines wärmegedämmten Rohres hervor, an dessen Außenseite ein unter Hitzeeinwirkung sich kontrahierendes Rohr oder Film angeordnet ist.

In der Druckschrift DE 33 08 396 A1 ist die Verwendung von unter Wärmeeinwirkung schrumpfbaren Schläuchen offenbart, um damit einen Oberflächenabschluss einer wärmegedämmten Rohrleitung herzustellen.

Aus der Druckschrift DE 36 35 515 A1 ist ein wärmeisoliertes Leitungsrohr bekannt, bestehend aus zwei konzentrischen Rohren, von denen zumindest das Außenrohr ein gewelltes Metallrohr ist. Zwischen den Rohren ist eine Wärmeisolationsschicht angeordnet, auf dem Außenrohr ein aufsitzender Mantel aus Kunststoff.

Der Erfindung liegt die Aufgabe zugrunde, ein Verfahren zur Herstellung eines wärmegedämmten Rohres anzugeben, das die oben genannten Nachteile überwindet, das in einfacher und kostengünstiger Weise durchführbar ist, das ein Rohr herzustellen gestattet, das in engen Radien verlegt werden kann, wobei gleichzeitig eine gute Ringsteifigkeit vorliegt und bei dem insbesondere das Versagen der Dämmwirkung aufgrund von eindringendem Wasser verhindert ist.

Eine weitere Aufgabe der Erfindung ist es, eine Vorrichtung zur Durchführung des Verfahrens anzugeben und das nach dem Verfahren hergestellte Rohr.

Die Lösung der Aufgabe der Erfindung, ein Verfahren zur Herstellung eines wärmegedämmten Rohres anzugeben, erfolgt gemäß Anspruch 1.

Erfindungsgemäß wurde erkannt, dass das Verfahren zur Herstellung eines wärmegedämmten Rohres mit einer eingeschnürten äußeren Oberfläche der Wärmedämmschicht folgende Schritte umfasst:
- Bereitstellen eines Innenrohres;
- Anordnung einer Wärmedämmschicht um das Innenrohr;
- Anordnung von Spannelementen auf der äußeren Oberfläche der Wärmedämmschicht, wobei als Spannelement ein Band gewählt wird, welches Polymermaterial enthält oder aus einem Polymermaterial besteht, das unter Einwirkenlassen von Energie kontrahiert, und als Polymermaterial bevorzugt ein Polyethylenterephthalat (PET) oder ein Polypropylen (PP) gewählt wird, das mono- oder biaxial vorgereckt ist, wobei das Band an seinen Enden verschweißt und / oder verklebt und / oder stoff- und / oder reibschlüssig verbunden ist, wobei eine in etwa gleich beabstandete Anordnung von vielen Spannelementen auf der äußeren Oberfläche der Wärmedämmschicht erfolgt;
- Einwirkenlassen von Energie auf die Spannelemente, um diese zu kontrahieren und die äußere Oberfläche der Wärmedämmschicht einzuschnüren.

Es gelingt nach diesem erfindungsgemäßen Verfahren, ein wärmegedämmtes Rohr mit einer eingeschnürten äußeren Oberfläche der Wärmedämmschicht in einfacher und kostengünstiger Weise bereitzustellen.

Darüber hinaus zeigt das wärmegedämmte Rohr, das gemäß des erfindungsgemäßen Verfahrens hergestellt ist, aufgrund der ausgebildeten Wellenstruktur eine hohe Flexibilität bei gleichzeitig guter Ringsteifigkeit, da die sich ausbildenden Wellen als "Sollknickstelle" wirken, und das sich zwischen den Wellentälern ausbildende "Gewölbe" das Flächenträgheitsmoment des Rohrsystems deutlich erhöht.

Das Innenrohr kann erfindungsgemäß derart ausgeführt sein, dass es ein Polymermaterial enthält oder aus einem Polymermaterial besteht, wobei das Polymermaterial bevorzugt ein vernetztes Polyethylen (PE-X) oder ein hochtemperaturbeständiges Polyethylen (PE-RT) oder ein Polybutylen (PB) oder ein Polypropylen (PP) ist.

Es ist in diesem Zusammenhang von besonderem Vorteil, wenn das Innenrohr durch einen Extrusionsprozess bereitgestellt wird, da ein derartiges Innenrohr damit in einfacher Weise herstellbar ist, kostengünstig und hinsichtlich seiner Maßhaltigkeit (Durchmesser, Wanddicke) besonders gut kontrollierbar und reproduzierbar herstellbar ist.

Die auf dem Innenrohr anzuordnende Wärmedämmschicht kann erfindungsgemäß derart ausgeführt sein, dass sie ein Polymermaterial enthält oder aus Polymermaterial besteht, wobei das Polymermaterial bevorzugt ein Polyolefinschaum und / oder ein Polyurethanschaum und / oder ein Polystyrolschaum ist.

Ein Polyolefinschaum ist ebenso wie ein Polyurethanschaum und ein Polystyrolschaum hoch wärmedämmend.

Besonders bevorzugt sind in diesem Zusammenhang so genannte geschlossenzellige Schäume, da bei diesen Schäumen eine besonders hohe Wärmedämmfähigkeit vorliegt. Weiterhin verhindern solche geschlossenzelligen Schäume besonders vorteilhaft das Ausbreiten von Wasser in der Wärmedämmschicht.

Die Wärmedämmschicht aus dem Polyolefinschaum und / oder dem Polyurethanschaum und / oder dem Polystyrolschaum ist dabei um das Innenrohr herum angeordnet und bildet die Schicht, die den Verlust von Wärmeenergie aus dem Wärmeträgerfluid, das im Innenrohr zirkuliert, nach außen wirksam vermindert.

Im Rahmen der vorliegenden Erfindung ist es besonders vorteilhaft, wenn die Wärmedämmschicht derart ausgeführt ist, dass sie aus einem um das Innenrohr herumgelegten und an der Stoßkante spaltfrei verschweißten und / oder verklebten Element besteht.

Hierzu kann beispielsweise ein Streifen aus Polymermaterialschaum am Rohr angelegt und radial um das Rohr herumgelegt werden und an seiner Stoßkante entsprechend spaltfrei verschweißt und / oder verklebt werden.

In einer alternativen vorteilhaften Ausführung kann vorgesehen sein, dass ein Element, welches schraubenartig um das Innenrohr herumgewunden und an den sich berührenden Stoßkanten spaltfrei verschweißt und / oder verklebt wird, für die Wärmedämmschicht eingesetzt wird.
Nach diesem erfindungsgemäßen Verfahren ist es also möglich, ein Innenrohr mit einem Element, das beispielsweise ein Band aus Polymerschaummaterial sein kann, zu ummanteln, indem dieses Band schraubenförmig um das Innenrohr herumgewunden ist.

An den sich berührenden Stoßkanten wird dann das Band spaltfrei verschweißt und / oder verklebt und bildet damit eine durchgehende Schicht auf dem Innenrohr, die als Wärmedämmschicht wirkt.

Polymerschaummaterialien in Form von Polyolefinschaum bzw. Polyurethanschaum bzw. Polystyrolschaum sind einfach zugänglich und kostengünstig, wodurch das erfindungsgemäße Verfahren besonders bevorzugt ist.

Es ist im Rahmen der vorliegenden Erfindung auch möglich, als Wärmedämmschicht ein Aerogel vorzusehen, das ganz besonders hohe Wärmedämmeigenschaften aufweist.

Polymerschaummaterialien in Form von Polyolefinschaum bzw. Polyurethanschaum bzw. Polystyrolschaum bzw. Aerogel können auch in beliebiger Weise kombiniert eingesetzt werden, um die Wärmedämmschicht zu bilden.

Es sind auch andere hier nicht genannte Polymerschaummaterialien als Wärmedämmschicht einsetzbar.

Im Rahmen der vorliegenden Erfindung ist weiterhin vorteilhaft vorgesehen, dass als Spannelement, das auf der äußeren Oberfläche der Wärmedämmschicht angeordnet ist, ein Band oder ein Geflecht oder ein Gestrick oder ein Zopf oder eine parallele Faden- oder Filamentschar gewählt wird, welche Polymermaterial enthält oder aus einem Polymermaterial besteht.

Dieses Spannelement ist derartig ausgewählt, dass es unter Einwirkenlassen von Energie kontrahiert. Unter Kontrahieren wird im Rahmen dieser Erfindung verstanden, dass das Spannelement sich verkürzt, also sich signifikant in seiner Länge ändert.

Ein Spannelement gemäß vorstehend beschriebener Art ist also befähigt, unter Einwirkenlassen von Energie zu kontrahieren, das heißt seine Länge signifikant zu ändern.

Es hat sich im Rahmen der vorliegenden Erfindung als günstig herausgestellt, wenn als Polymermaterial für das Spannelement bevorzugt ein Polyethylenterephthalat (PET) oder ein Polypropylen (PP) gewählt wird, das mono- oder biaxial vorgereckt ist.

Ein Band oder ein Geflecht oder ein Gestrick oder ein Zopf oder eine parallele Faden- oder Filamentschar, die vorgereckt ist, ist besonders befähigt, unter Einwirkenlassen von Energie zu kontrahieren, das heißt sich in ihrer Länge zu verkürzen.

Durch das Kontrahieren des Spannelementes, das heißt das Verkürzen der Länge des Spannelementes, welches auf der Wärmedämmschicht angeordnet ist, kommt es dazu, dass die Wärmedämmschicht im Bereich unter dem Spannelement und im Bereich zwischen Spannelement und Innenrohr komprimiert wird.

Die Komprimierung kann dabei je nach Art der Wärmedämmschicht, der gewählten Dicke der Wärmedickschicht, der Art des Spannelements, der Abmaße des Spannelements und der Höhe der einwirkenden Energie in weiten Grenzen gewählt werden.

Insbesondere kann der Grad der Komprimierung, der auf die Wärmedämmschicht einwirkt, derart gewählt werden, dass diese sehr stark komprimiert wird, so dass sich zwischen zwei Einschnürungen Zellen im Polymerschaummaterial der Wärmedämmschicht bilden. Durch diese Zellenbildungen kommt es dazu, dass bei einer eventuellen Undichtigkeit Wasser an diesen Stellen sich nicht weiter in der Wärmedämmschicht ausbreiten kann. Durch Undichtigkeiten oder aus anderen Gründen vorhandenes Wasser wird also in der Wärmedämmschicht nicht oder kaum weitergeleitet, denn durch die Komprimierung der Wärmedämmschicht und die Ausbildung von Zellen wird das Wasser in sich ausbildenden Kompartimenten weitgehend eingeschlossen.

Mit dieser Maßnahme wird also erfindungsgemäß erreicht, dass sowohl eine hohe Flexibilität für die Verlegung des nach diesem Verfahren hergestellten wärmegedämmten Rohres vorliegt, wie auch dass eine sehr wirksame Maßnahme getroffen ist, die Ausbreitung von Wasser in der Wärmedämmschicht im Falle einer Leckage wirksam zu begrenzen.

Zur Anordnung des Spannelements auf der Wärmedämmschicht sind grundsätzlich zwei Möglichkeiten gegeben:
1. Das Spannelement wird in einzelnen Ringen um die Wärmedämmschicht herum angeordnet, wobei bevorzugt ist, dass die einzelnen Ringe zueinander etwa gleiche Abstände aufweisen. Damit ist ein wärmegedämmtes Rohr zugänglich, das in etwa gleichbeabstandete Einschürungen auf seiner äußeren Oberfläche aufweist.
2. In einer alternativen Ausführungsform kann vorgesehen sein, dass das Spannelement schraubenartig auf der Wärmedämmschicht angeordnet wird, wobei vorgesehen sein kann, dass die Abstände benachbarter "Schraubengänge" in etwa gleich gewählt werden.

Es hat sich im Rahmen der vorliegenden Erfindung als günstig erwiesen, wenn bei der "Ring"-Anordnung gemäß 1. vorgesehen ist, dass das Spannelement an seinen Enden verschweißt und / oder verklebt und / oder stoff- und / oder reibschlüssig verbunden ist.

Damit kann das Spannelement besonders sicher auf der Wärmedämmschicht positioniert werden und ist langzeitbeständig.

Die Verschweißung der Enden des Spannelements kann in einem Kunststoffschweißverfahren, wie beispielsweise einem Spiegel- oder Reibschweißverfahren, oder in einem Laserschweißverfahren durchgeführt werden. Eine besonders feste und sichere Haltbarkeit wird damit erzielt.

In einer anderen sehr vorteilhaften Ausführungsform der Erfindung kann vorgesehen sein, dass das Spannelement derart gewählt wird, dass es unter Feuchtigkeitseinfluss kontrahiert.

Hierzu kann beispielsweise vorgesehen sein, dass das Polymermaterial des Spannelements derart gewählt wird, dass es unter dem Einfluss von Feuchtigkeit eine Kontraktion, also eine Längenverkürzung des Spannelements hervorrufen. Alternativ können dem Polymermaterial des Spannelements Komponenten zugesetzt werden, die unter dem Einfluss von Feuchtigkeit eine Kontraktion, also eine Längenverkürzung des Spannelements hervorrufen.
Dies hat große Vorteile im Falle einer Leckage.

Wenn sich, wie vorstehend geschildert, Wasser in der Dämmschicht ausbreitet, können die derartig ausgewählten Spannelemente, die unter Feuchtigkeitseinfluss kontrahieren, dann die Kompressionskraft auf die Dämmschicht weiter verstärken, so dass eine weitere Ausbreitung von Wasser in der Dämmschicht vermindert oder evtl. ganz unterbunden wird.

Erfindungsgemäß kann weiterhin vorgesehen sein, dass die Wärmedämmschicht Lagen und / oder Schichten umfasst, die unter dem Einfluss von Feuchtigkeit eine Kontraktion vollziehen. Dazu können die Lagen und / oder Schichten Polymermaterial enthalten oder aus Polymermaterial bestehen, das eine Längenverkürzung beim Zutritt von Wasser durchführt. Alternativ können dem Polymermaterial der Lagen und / oder Schichten Komponenten zugesetzt werden, die unter dem Einfluss von Feuchtigkeit eine Kontraktion, also eine Längenverkürzung hervorrufen. Unter dem Einfluss der Längenverkürzung wird die Wärmedämmschicht weiter komprimiert, so dass die Ausbreitung von Wasser unterbunden oder vermindert wird.
Dies hat große Vorteile im Falle einer Leckage.

Als vorteilhaft hat sich im Rahmen der vorliegenden Erfindung herausgestellt, wenn das Spannelement mit einer Vorspannung auf der äußeren Oberfläche der Wärmedämmschicht angeordnet wird.

Als Vorspannung hat sich eine Kraft von 0,1 bis 300 N bewährt, insbesondere ein solche von 2 bis 50 N.

Durch das Vorsehen einer Vorspannung, mit der das Spannelement auf die äußere Oberfläche der Wärmedämmschicht aufgebracht wird, wird zunächst eine geringe Kompression der Wärmedämmschicht erreicht.

Hierdurch ist die Positionierung der Spannelemente auf der Oberfläche der Wärmedämmschicht gegen Verschieben oder Verrutschen gesichert, so dass eine Produktion des erfindungsgemäßen wärmegedämmten Rohres mit geringerer Fehleranfälligkeit möglich wird.

Nach dem Aufbringen der Spannelement auf der äußeren Oberfläche der Wärmedämmschicht ist erfindungsgemäß vorgesehen, dass Energie auf das Spannelement einwirkt, wodurch dieses kontrahiert, das heißt dieses sich in seiner Länge verkürzt.

Als Energie, die auf das Spannelement einwirkt, kann Wärme, Strahlungsenergie, Strahlungswärme, IR-Strahlung oder eine Kombination der vorgenannten ausgewählt werden.

Durch das Einwirkungenlassen von Wärme, Strahlungsenergie, Strahlungswärme, IR-Strahlung oder eine Kombination der vorgenannten Energien kontrahiert das Spannelement und komprimiert die Wärmedämmschicht in dem Bereich, in dem es angeordnet ist.

Bei der Kompression wird die Dämmschicht zwischen Spannelement und Innenrohr verdichtet.

Als besonders günstig hat sich im Rahmen der vorliegenden Erfindung erwiesen, wenn das Verfahren zur Herstellung des wärmegedämmten Rohres derart gewählt wird, dass eine äußeren Schutzhülle auf der äußeren Oberfläche der Wärmedämmschicht angeordnet wird, wobei die äußere Schutzhülle bevorzugt durch einen Koextrusionsprozess aufgebracht wird.
Eine äußere Schutzhülle schützt das Rohr bei der Herstellung, der Lagerung, der Auslieferung und insbesondere beim Handling auf der Baustelle beim Bau der vorgedämmten Rohrleitung, sowie im späteren Einsatz. Dadurch wird eine hohe Gebrauchstauglichkeit erreicht und ein langlebiges Erzeugnis resultiert.
Die äußere Schutzhülle kann aus einem Polymermaterial bestehen oder ein Polymermaterial enthalten. Bevorzugt wird hierzu ein zähes, abriebfestes und kerbunempfindliches Polymermaterial ausgewählt. Hierzu können spezielle Polyethylen-Typen, die unvernetzt oder vernetzt zum Einsatz kommen, ausgewählt werden.
Es kann weiter vorgesehen sein, dass in oder an der äußeren Schutzhülle weitere Lagen oder Komponenten vorgesehen sind, die die äußere Schutzhülle beispielsweise hinsichtlich deren mechanischer Stabilität, chemischer Resistenz und / oder thermischen Verhalten verbessert. So kann vorgesehen sein, dass Fasern, Schichten und / oder Partikel vorhanden sind und die äußere Schutzhülle funktionalisieren.

Vorteilhaft kann dazu vorgesehen sein, eine Diffusionssperrschicht gegen Wasserdampf und / oder gegen Gase, insbesondere gegen die Gase, die zur Herstellung des Schaums der Wärmedämmschicht dienen, anzuordnen.
Die Anordnung der Diffusionssperrschicht kann an und / oder in der Wandung des Innenrohres und / oder an und / oder in der Wärmedämmschicht und / oder an und / oder in der äußeren Schutzhülle erfolgen.

Als Verfahren, eine äußere Schutzhülle auf der äußeren Oberfläche der Wärmedämmschicht anzuordnen, hat sich erfindungsgemäß ergeben, die äußere Schutzhülle auf der Wärmedämmschicht aufzuextrudieren, wobei dies in einem Koextrusionsprozess durchgeführt wird. Alternativ kann die äußere Schutzhülle als Streifen schraubenartig um die Wärmedämmschicht herumgewunden und an den sich berührenden Stoßkanten spaltfrei verschweißt und / oder verklebt werden.
Bei der Aufbringung der äußeren Schutzhülle auf die Wärmedämmschicht im Koextrusionsverfahren kann vorteilhaft so viel Wärmeenergie vom heißen Polymermaterial der äußeren Schutzhülle auf das Spannelement übertragen werden, dass dies im gewünschten Maße kontrahiert.
Hierdurch gelingt es in einfacher Weise, die Kontraktion der Spannelemente durchzuführen, wobei dies bei der Aufbringung der äußeren Schutzhülle erfolgt.
Damit ist das erfindungsgemäße wärmegedämmte Rohr in einem einfachen Verfahren zugänglich.
Die in den Zellen des Polymerschaumes der Wärmedämmschicht eingeschlossenen Zellgase expandieren beim Kontakt der Wärmedämmschicht mit dem heißen Polymermaterial der äußeren Schutzhülle und verstärken damit den Effekt der Einschnürung durch die kontrahierenden Spannelemente indem zwischen den Spannelementen sich die Wärmedämmschicht nach außen wölbt.
Hierdurch wird in besonders vorteilhafter Weise eine in etwa sinusförmige Wellung der äußeren Schutzhülle erzeugt, wodurch ein wärmegedämmten Rohres zugänglich ist, das besonders günstig in engen Radien verlegt werden kann, wobei gleichzeitig eine gute Ringsteifigkeit vorliegt.
Es hat sich im Rahmen der vorliegenden Erfindung als günstig herausgestellt, wenn vorgesehen ist, neben dem Innenrohr im wärmegedämmten Rohr noch wenigstens ein Leerrohr vorzusehen.
Das Leerrohr kann zu verschiedenen Zwecken eingesetzt werden, dies kann das Einziehen von Leitungen umfassen oder das Leiten von Medien. Auch zum Zwecke einer Kontrolle oder einer Detektion kann das Leerrohr dienen.

Weiterhin ist es im Rahmen der vorliegenden Erfindung sehr vorteilhaft, wenn das wärmegedämmten Rohr eine Leitung zur Signalübertragung und / oder Energieübertragung aufweist.
Eine solche Leitung zur Signalübertragung und / oder Energieübertragung kann genutzt werden, um neben der Wärmeenergieleitung auch begleitende Informationen zu übermitteln oder Energie zu übertragen. Ferner lassen sich damit Informationen und Daten weiterleiten oder Zustände mittels Detektoren ermitteln und auslesen.

Die Lösung der Aufgabe, eine Vorrichtung zur Durchführung des Verfahrens zur Herstellung eines wärmegedämmten Rohres anzugeben, erfolgt gemäß Anspruch 11. Erfindungsgemäß umfasst die Vorrichtung zur Durchführung des Verfahrens zur Herstellung eines wärmegedämmten Rohres mit einer eingeschnürten äußeren Oberfläche der Wärmedämmschicht
- ein Mittel zur Bereitstellung eines Innenrohres;
- ein Mittel zur Anordnung einer Wärmedämmschicht um das Innenrohr;
- ein Mittel zur Anordnung der Spannelemente auf der äußeren Oberfläche der Wärmedämmschicht, wobei als Spannelement ein Band gewählt wird, welches Polymermaterial enthält oder aus einem Polymermaterial besteht, das unter Einwirkenlassen von Energie kontrahiert, und als Polymermaterial bevorzugt ein Polyethylenterephthalat (PET) oder ein Polypropylen (PP) gewählt wird, das mono- oder biaxial vorgereckt ist, wobei das Mittel die Spannelemente um die Wärmedämmschicht herum legt und die jeweiligen Enden der jeweiligen Spannelemente miteinander zu einzelnen Ringen verbindet; wobei das Mittel viele Spannelemente auf der äußeren Oberfläche der Wärmedämmschicht in etwa gleichen Abständen anordnet;
- ein Mittel zum Einwirkenlassen von Energie auf die Spannelemente, um dieses zu kontrahieren und die äußere Oberfläche der Wärmedämmschicht einzuschnüren.

Als Mittel zur Bereitstellung eines Innenrohres kann ein Extruder ausgewählt sein, als Mittel zur Anordnung einer Wärmedämmschicht um das Innenrohr kann eine Vorrichtung gewählt sein, die das Innenrohr mit der Wärmedämmschicht umhüllt oder die Wärmdämmschicht um das Innenrohr herumwickelt und die Stoßkanten spaltfrei verschweißt und / oder verklebt. Als Mittel zur Anordnung wenigstens eines Spannelements auf der äußeren Oberfläche der Wärmedämmschicht kann eine Vorrichtung ausgewählt sein, die ein Spannelement um die Wärmedämmschicht herum legt und die Enden des Spannelements miteinander verbindet. Als Mittel zum Einwirkenlassen von Energie auf das Spannelement, um dieses zu kontrahieren und die äußere Oberfläche der Wärmedämmschicht einzuschnüren, kann eine Energiequelle dienen, die Wärme, Strahlungsenergie, Strahlungswärme, IR-Strahlung, oder eine Kombination dieser bereitstellt. Dies kann beispielsweise eine Lampe oder ein Gebläse sein.

Schließlich erfolgt die Lösung der Aufgabe, ein wärmegedämmtes Rohr bereitzustellen, gemäß Anspruch 12.

Das erfindungsgemäße wärmegedämmte Rohr wird entsprechend des oben geschilderten Verfahrens hergestellt.

Die vorliegende Erfindung wird anhand der beigefügten Figuren näher erläutert.

Hierzu zeigt
Fig. 1 eine seitliche Ansicht eines wärmegedämmten Rohres im Zustand vor dem Kontrahieren der Spannelemente;
Fig. 2 eine seitliche Ansicht eines wärmegedämmten Rohres im Zustand nach dem Kontrahieren der Spannelemente.

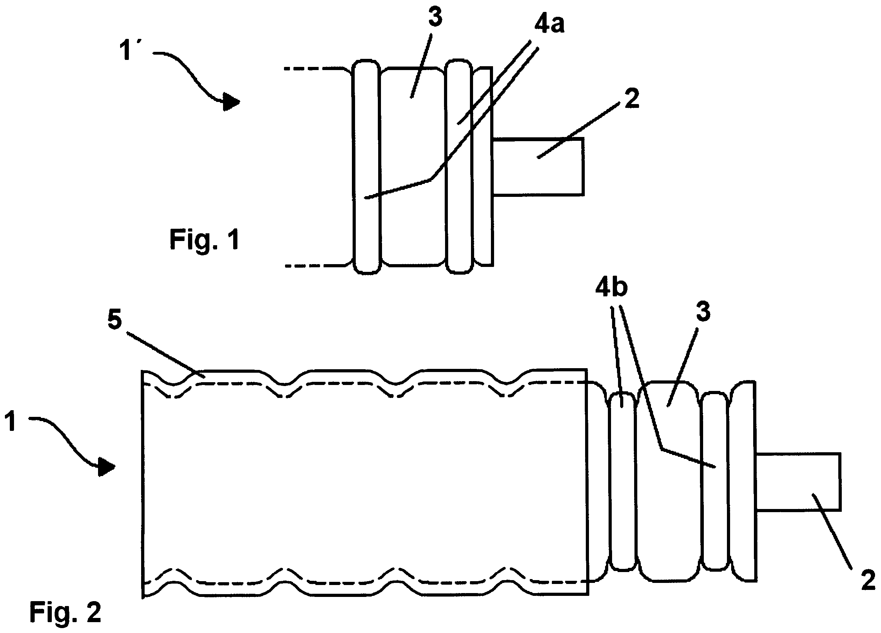

Fig. 1 zeigt ein wärmegedämmtes Rohr 1' im Zustand vor dem Kontrahieren der Spannelemente 4, welches ein Innenrohr 2 aufweist.
Das Innenrohr 2 ist aus vernetztem Polyethylen (PE-X).
Es ist alternativ auch möglich, das Innenrohr 2 aus hochtemperaturbeständigen Polyethylen (PE-RT) oder Polybutylen (PB) oder Polypropylen (PP) zu fertigen.
Das Innenrohr 2 ist allseitig von einer Wärmedämmschicht 3 umgeben.
Die Wärmedämmschicht 3 besteht aus Polyolefinschaum.
Es ist alternativ auch möglich, die Wärmedämmschicht 3 aus Polyurethanschaum bzw. aus Polystyrolschaum zu fertigen.
Auf der äußeren Oberfläche der Wärmedämmschicht 3 ist ein unkontrahiertes Spannelement 4a angeordnet, das mit einer Vorspannung von 10 N auf der Wärmedämmschicht 3 angeordnet ist.

Durch die Vorspannung des unkontrahierten Spannelements 4a ist die Wärmedämmschicht 3 im Bereich des unkontrahierten Spannelements 4a geringfügig eingeschnürt.

Das unkontrahierte Spannelement 4a besteht aus einem Band aus gerecktem Polyethylenterephthalat, welches an seinen Enden verschweißt ist.

Das unkontrahierte Spannelement 4a ist damit als Ringbund ausgebildet, der auf der Oberfläche der Wärmedämmschicht 3 spannend anliegt.

In Fig. 1 ist ein weiteres unkontrahiertes Spannelement 4a gezeigt, das zum ersten unkontrahierten Spannelement 4a beabstandet ist.

Das zweite unkontrahierte Spannelement 4a ist gleich aufgebaut und in gleicher Art auf der äußeren Oberfläche der Wärmedämmschicht 3 angeordnet.

Weitere hier nicht gezeigte unkontrahierte Spannelemente 4a sind in etwa äquidistant zu diesen ersten beiden genannten unkontrahierten Spannelementen 4a angeordnet.

Auf diese Weise ist eine in etwa gleich beabstandete Anordnung von vielen unkontrahierten Spannelementen 4a auf der äußeren Oberfläche der Wärmedämmschicht 3 realisiert.

Fig. 2 zeigt ein wärmegedämmtes Rohr 1 im Zustand nach dem Kontrahieren der Spannelemente 4, das ein Innenrohr 2 aufweist, entsprechend der Erfindung.

Das Innenrohr 2 ist aus vernetztem Polyethylen (PE-X).
Alternativ kann das Innenrohr aus hochtemperaturbeständigen Polyethylen (PE-RT) oder Polybutylen (PB) oder Polypropylen (PP) gefertigt sein.

Das Innenrohr 2 ist allseitig umgeben von einer Wärmedämmschicht 3, die aus Polyurethanschaum (PUR-Schaum) besteht.
Es ist alternativ auch möglich, die Wärmedämmschicht 3 aus Polyurethanschaum bzw. aus Polystyrolschaum zu fertigen.

Auf der äußeren Oberfläche der Wärmedämmschicht 3 sind kontrahierte Spannelemente 4b angeordnet, die die Wärmedämmschicht 3 aus Polyurethanschaum einschnüren und die den Bereich der Wärmedämmschicht 3 zwischen dem kontrahierten Spannelement 4b und dem Innenrohr 2 komprimieren. Die kontrahierten Spannelemente 4b sind etwa gleichbeabstandet angeordnet, so dass die Abstände von einem kontrahierten Spannelement 4b zum nächsten etwa gleich groß sind.

Auf diese Weise bilden sich Einschnürungen der Oberfläche der Wärmedämmschicht 3 durch die kontrahierten Spannelemente 4b.

Die Einschnürungen an der Oberfläche der Wärmedämmschicht 3, hervorgerufen durch die kontrahierten Spannelemente 4b, äußern sich darin, dass der Durchmesser des wärmegedämmten Rohres 1 im Bereich des kontrahierten Spannelements 4b geringer ist als im Bereich der Wärmedämmschicht 3, an der kein kontrahiertes Spannelement 4b angeordnet ist.

Eine äußere Schutzhülle 5, bestehend aus Polyethylen, ist auf der durch die kontrahierten Spannelemente 4b eingeschnürten äußeren Oberfläche der Wärmedämmschicht 3 aufgebracht.

Es ist auch möglich, das Material der äußeren Schutzhülle 5, hier Polyethylen, physikalisch und / oder chemisch zu schäumen, wodurch die äußere Schutzhülle 5 in ihrem Wärmedämmverhalten weiter verbessert ist.

Die äußere Schutzhülle 5 ist in einem Koextrusionsverfahren aufgebracht, wobei die Kontur der äußeren Schutzhülle 5 durch die Einschnürungen der Wärmedämmschicht 3, die durch die kontrahierten Spannelemente 4b hervorgerufen wird, erfolgt.

Da die kontrahierten Spannelemente 4b als Ringbänder ausgebildet sind, sind die durch die kontrahierten Spannelemente 4b an der Wärmedämmschicht 3 hervorgerufenen Einschnürungen ebenfalls ringförmig ausgebildet.

Die äußere Schutzhülle 5 zeigt demzufolge ringförmige Einschnürungen, die in etwa gleich beabstandet sind.

Zwischen den in etwa gleich beabstandeten ringförmigen Einschnürungen der äußeren Schutzhülle 5 sind ringförmige Erhebungen ausgebildet.

Die ringförmigen Erhebungen auf der äußeren Schutzhülle 5 weisen im Querschnitt einen größeren Durchmesser auf als die ringförmigen Einschnürungen.

Durch den Koextrusionsprozess beim Aufbringen der äußeren Schutzhülle 5 auf die Wärmedämmschicht 3, auf der die zunächst unkontrahierten Spannelemente 4a angeordnet sind, erfolgte durch die einwirkende Wärme des heißen die äußere Schutzschicht 5 bildenden Polymers eine Kontraktion, das heißt Längenverkürzung, der zunächst unkontrahierten Spannelemente 4a zu den dann kontrahierten, das heißt längenverkürzten Spannelementen 4b.

Bei der Koextrusion, dem Auftragen der äußeren Schutzschicht 5 auf die Wärmedämmschicht 3, erfolgt also der Kontraktionsprozess der Spannelemente 4, wobei die zunächst unkontrahierten Spannelemente 4a sich dann zu den kontrahierten Spannelementen 4b verkürzen und die Wärmedämmschicht 3 an diesen Stellen einschnüren.

### Bezugszeichenliste

- 1: wärmegedämmtes Rohr
- 1': wärmegedämmtes Rohr im Zustand vor dem Kontrahieren der Spannelemente 4
- 2: Innenrohr
- 3: Wärmedämmschicht
- 4: Spannelement
- 4a: unkontrahiertes Spannelement
- 4b: kontrahiertes Spannelement
- 5: äußere Schutzhülle

## Patentansprüche

1. Verfahren zur Herstellung eines wärmegedämmten Rohres (1) mit einer eingeschnürten äußeren Oberfläche der Wärmedämmschicht (3) gemäß folgender Schritte:
- Bereitstellen eines Innenrohres (2);
- Anordnung einer Wärmedämmschicht (3) um das Innenrohr (2);
- Anordnung von Spannelementen (4) auf der äußeren Oberfläche der Wärmedämmschicht (3), wobei als Spannelement (4) ein Band gewählt wird, welches Polymermaterial enthält oder aus einem Polymermaterial besteht, das unter Einwirkenlassen von Energie kontrahiert, und als Polymermaterial bevorzugt ein Polyethylenterephthalat (PET) oder ein Polypropylen (PP) gewählt wird, das mono- oder biaxial vorgereckt ist, wobei das Band an seinen Enden verschweißt und / oder verklebt und / oder stoff- und / oder reibschlüssig verbunden ist, wobei eine in etwa gleich beabstandete Anordnung von vielen Spannelementen (4) auf der äußeren Oberfläche der Wärmedämmschicht (3) erfolgt;
- Einwirkenlassen von Energie auf die Spannelemente (4), um diese zu kontrahieren und die äußere Oberfläche der Wärmedämmschicht (3) einzuschnüren.

2. Verfahren zur Herstellung nach Anspruch 1, **dadurch gekennzeichnet, dass** das Innenrohr (2) derart ausgeführt wird, dass es ein Polymermaterial enthält oder aus einem Polymermaterial besteht, wobei das Polymermaterial bevorzugt ein vernetztes Polyethylen (PE-X) oder ein hochtemperaturbeständiges Polyethylen (PE-RT) oder ein Polypropylen (PP) oder ein Polybutylen (PB) ist.

3. Verfahren zur Herstellung nach einem der vorangehenden Ansprüche, **dadurch gekennzeichnet, dass** die Wärmedämmschicht (3) derart ausgeführt wird, dass sie ein Polymermaterial enthält oder aus Polymermaterial besteht, wobei das Polymermaterial be-vorzugt ein Polyolefinschaum und / oder ein Polyurethanschaum und / oder ein Polystyrolschaum und / oder ein Aerogel ist.

4. Verfahren zur Herstellung nach Anspruch 3, **dadurch gekennzeichnet, dass** die Wärmedämmschicht (3) derart ausgeführt wird, das sie aus einem um das Innenrohr (2) herumgelegten und an der Stoßkante spaltfrei verschweißten und / oder verklebten Element oder aus einem Element, welches schraubenartig um das Innenrohr (2) herumgewunden und an den sich berührenden Stoßkanten spaltfrei verschweißt und / oder verklebt ist, besteht.

5. Verfahren zur Herstellung nach einem der vorangehenden Ansprüche, **dadurch gekennzeichnet, dass** das Spannelement (4) derart gewählt wird, dass es unter Feuchtigkeitseinfluss kontrahiert.

6. Verfahren zur Herstellung nach einem der vorangehenden Ansprüche, **dadurch gekennzeichnet, dass** das Spannelement (4) mit einer Vorspannung auf der äußeren Oberfläche der Wärmedämmschicht (3) angeordnet wird, wobei die Vorspannung 0,1 bis 300 N (Newton), vorzugsweise 2 bis 50 N (Newton) beträgt.

7. Verfahren zur Herstellung nach einem der vorangehenden Ansprüche, **dadurch gekennzeichnet, dass** als Energie, die auf das Spannelement (4) einwirkt, Wärme, Strahlungsenergie, Strahlungswärme, IR-Strahlung, oder eine Kombination der vorgenannten ausgewählt wird.

8. Verfahren zur Herstellung nach einem der vorangehenden Ansprüche, **dadurch gekennzeichnet, dass** eine äußeren Schutzhülle (5) auf der äußeren Oberfläche der Wärmedämmschicht (3) angeordnet wird, wobei die äußere Schutzhülle (5) bevorzugt durch einen Koextrusionsprozess aufgebracht wird.

9. Verfahren zur Herstellung nach einem der Ansprüche 1 bis 7, **dadurch gekennzeichnet, dass** eine äußere Schutzhülle (5) auf der äußeren Oberfläche der Wärmedämmschicht (3) angeordnet wird, wobei die äußere Schutzhülle (5) als Streifen schraubenartig um die Wärmedämmschicht (3) herumgewunden und an den sich berührenden Stoßkanten spaltfrei verschweißt und / oder verklebt wird.

10. Verfahren zur Herstellung nach einem der vorangehenden Ansprüche, **dadurch gekennzeichnet, dass** wenigstens eine Diffusionssperrschicht gegen Wasserdampf und / oder gegen Gase, insbesondere gegen die Gase, die zur Herstellung des Schaums der Wärmedämmschicht (3) dienen, vorgesehen wird, die an und / oder in der Wandung des Innenrohres (2) und / oder an und / oder in der Wärmedämmschicht (3) und / oder an und / oder in der äußeren Schutzhülle (5) angeordnet ist.

11. Vorrichtung zur Durchführung des Verfahrens nach einem der Ansprüche 1 bis 10, umfassend:
- ein Mittel zur Bereitstellung des Innenrohres (2);
- ein Mittel zur Anordnung der Wärmedämmschicht (3) um das Innenrohr (2);
- ein Mittel zur Anordnung der Spannelemente (4) auf der äußeren Oberfläche der Wärmedämmschicht (3), wobei als Spannelement (4) ein Band gewählt wird, welches Polymermaterial enthält oder aus einem Polymermaterial besteht, das unter Einwirkenlassen von Energie kontrahiert, und als Polymermaterial bevorzugt ein Polyethylenterephthalat (PET) oder ein Polypropylen (PP) gewählt wird, das mono- oder biaxial vorgereckt ist, wobei das Mittel die Spannelemente (4) um die Wärmedämmschicht (3) herum legt und die jeweiligen Enden der jeweiligen Spannelemente (4) miteinander zu einzelnen Ringen verbindet; wobei das Mittel viele Spannelemente (4) auf der äußeren Oberfläche der Wärmedämmschicht (3) in etwa gleichen Abständen anordnet,
- ein Mittel zum Einwirkenlassen von Energie auf die Spannelemente (4), um dieses zu kontrahieren und die äußere Oberfläche der Wärmedämmschicht (3) einzuschnüren.

12. Wärmegedämmtes Rohr (1), hergestellt gemäß dem Verfahren nach einem der Ansprüche 1 bis 10.

## Claims

1. Method for producing a thermally insulated pipe (1) with a constricted outer surface of the thermally insulating layer (3) according to the following steps:
- providing an inner pipe (2),
- arranging a thermally insulating layer (3) around the inner pipe (2),
- arranging clamping elements (4) on the outer surface of the thermally insulating layer (3), choosing as the clamping element (4) a strip which contains polymer material or consists of a polymer material that contracts under the effect of energy, and choosing as the polymer material preferably a polyethylene terephthalate (PET) or a polypropylene (PP) that is monoaxially or biaxially pre-stretched, the strip being welded and/or adhesively bonded and/or connected in a material-bonding and/or frictionally engaging manner at its ends, an approximately equally spaced-apart arrangement of many clamping elements (4) being provided on the outer surface of the heat insulating layer (3);
- allowing energy to act on the clamping elements (4), in order to contract them and constrict the outer surface of the thermally insulating layer (3).

2. Production method according to Claim 1, **characterized in that** the inner pipe (2) is made such that it contains a polymer material or consists of a polymer material, the polymer material preferably being a crosslinked polyethylene (PE-X) or a high-temperature-resistant polyethylene (PE-RT) or a polypropylene (PP) or a polybutylene (PB).

3. Production method according to one of the preceding claims, **characterized in that** the thermally insulating layer (3) is made such that it contains a polymer material or consists of polymer material, the polymer material preferably being a polyolefin foam and/or a polyurethane foam and/or a polystyrene foam and/or an aerogel.

4. Production method according to Claim 3, **characterized in that** the thermally insulating layer (3) is made such that it consists of an element laid around the inner pipe (2) and welded and/or adhesively bonded without a gap at the abutting edge or of an element that is wound helically around the inner pipe (2) and welded and/or adhesively bonded without a gap at the touching abutting edges.

5. Production method according to one of the preceding claims, **characterized in that** the clamping element (4) is chosen such that it contracts under the influence of moisture.

6. Production method according to one of the preceding claims, **characterized in that** the clamping element (4) is arranged with a prestress on the outer surface of the thermally insulating layer (3), the prestress being 0.1 to 300 N (newtons), preferably 2 to 50 N (newtons).

7. Production method according to one of the preceding claims, **characterized in that** heat, radiant energy, radiant heat, IR radiation, or a combination of the aforementioned, is chosen as the energy that acts on the clamping element (4).

8. Production method according to one of the preceding claims, **characterized in that** an outer protective sheath (5) is arranged on the outer surface of the thermally insulating layer (3), the outer protective sheath (5) preferably being applied by a coextrusion process.

9. Production method according to one of Claims 1 to 7, **characterized in that** an outer protective sheath (5) is arranged on the outer surface of the thermally insulating layer (3), the outer protective sheath (5) being wound as a strip helically around the thermally insulating layer (3) and welded and/or adhesively bonded without a gap at the touching abutting edges.

10. Production method according to one of the preceding claims, **characterized in that** at least one diffusion barrier layer against water vapour and/or against gases, in particular against the gases that serve for producing the foam of the thermally insulating layer (3), is provided, arranged on and/or in the wall of the inner pipe (2) and/or on and/or in the thermally insulating layer (3) and/or on and/or in the outer protective sheath (5).

11. Device for carrying out the method according to one of Claims 1 to 10, comprising:
- a means for providing the inner pipe (2);
- a means for arranging the thermally insulating layer (3) around the inner pipe (2);
- a means for arranging the clamping elements (4) on the outer surface of the thermally insulating layer (3), choosing as the clamping element (4) a strip which contains polymer material or consists of a polymer material that contracts under the effect of energy, and choosing as the polymer material preferably a polyethylene terephthalate (PET) or a polypropylene (PP) that is monoaxially or biaxially pre-stretched, the means laying the clamping elements (4) around the thermally insulating layer (3) and connecting the respective ends of the respective clamping elements (4) to one another to form individual rings; the means arranging many clamping elements (4) at approximately equal spacings on the outer surface of the thermally insulating layer (3),
- a means for allowing energy to act on the clamping elements (4), in order to contract them and constrict the outer surface of the thermally insulating layer (3).

12. Thermally insulated pipe (1), produced by the method according to one of Claims 1 to 10.

## Revendications

1. Procédé de production d'un tuyau calorifugé (1) avec une couche de calorifugeage (3) présentant une surface extérieure serrée, comprenant les étapes suivantes:
- préparer un tube intérieur (2);
- placer une couche de calorifugeage (3) autour du tube intérieur (2);
- placer des éléments de serrage (4) sur la surface extérieure de la couche de calorifugeage (3), dans lequel on choisit comme élément de serrage (4) une bande qui contient un matériau polymère ou qui se compose d'un matériau polymère, qui se contracte sous l'action d'une énergie, et on choisit comme matériau polymère de préférence un polyéthylène téréphtalate (PET) ou un polypropylène (PP), qui est préétiré de façon monoaxiale ou biaxiale, dans lequel la bande est soudée et/ou collée et/ou assemblée de façon matérielle et/ou par friction à ses extrémités, dans lequel on procède au placement de nombreux éléments de serrage (4) à des distances sensiblement égales sur la surface extérieure de la couche de calorifugeage (3);
- faire agir une énergie sur les éléments de serrage (4), afin de les contracter et de serrer la surface extérieure de la couche de calorifugeage (3).

2. Procédé de production selon la revendication 1, **caractérisé en ce que** l'on réalise le tube intérieur (2) de telle manière qu'il contienne un matériau polymère ou qu'il se compose d'un matériau polymère, dans lequel le matériau polymère est de préférence un polyéthylène réticulé (PE-X) ou un polyéthylène résistant aux hautes températures (PE-RT) ou un polypropylène (PP) ou un polybutylène (PB).

3. Procédé de production selon l'une quelconque des revendications précédentes, **caractérisé en ce que** l'on réalise la couche de calorifugeage (3) de telle manière qu'elle contienne un matériau polymère ou qu'elle se compose d'un matériau polymère, dans lequel le matériau polymère est de préférence une mousse de polyoléfine et/ou une mousse de polyuréthane et/ou une mousse de polystyrène et/ou un aérogel.

4. Procédé de production selon la revendication 3, **caractérisé en ce que** l'on réalise la couche de calorifugeage (3) de telle manière qu'elle se compose d'un élément posé autour du tube intérieur (2) et soudé et/ou collé sans jeu sur le côté de jonction ou d'un élément, qui est enroulé en spirale autour du tube intérieur (2) et qui est soudé et/ou collé sans jeu sur les côtés de jonction qui se touchent.

5. Procédé de production selon l'une quelconque des revendications précédentes, **caractérisé en ce que** l'on choisit l'élément de serrage (4) de telle manière qu'il se contracte sous l'influence de l'humidité.

6. Procédé de production selon l'une quelconque des revendications précédentes, **caractérisé en ce qu'**on place l'élément de serrage (4) avec une précontrainte sur la surface extérieure de la couche de calorifugeage (3), dans lequel la précontrainte vaut 0,1 à 300 N (Newton), de préférence 2 à 50 N (Newton).

7. Procédé de production selon l'une quelconque des revendications précédentes, **caractérisé en ce que** l'on choisit comme énergie, qui agit sur l'élément de serrage (4), la chaleur, une énergie de rayonnement, une chaleur de rayonnement, un rayonnement IR ou une combinaison des énergies précitées.

8. Procédé de production selon l'une quelconque des revendications précédentes, **caractérisé en ce que** l'on dispose une gaine de protection extérieure (5) sur la surface extérieure de la couche de calorifugeage (3), dans lequel la gaine de protection extérieure (5) est déposée de préférence par un procédé de co-extrusion.

9. Procédé de production selon l'une quelconque des revendications 1 à 7, **caractérisé en ce que** l'on dispose une gaine de protection extérieure (5) sur la surface extérieure de la couche de calorifugeage (3), dans lequel on enroule la gaine de protection extérieure (5) sous forme de bandes en spirale autour de la couche de calorifugeage (3) et on la soude et/ou on la colle sans jeu sur les côtés de jonction qui se touchent.

10. Procédé de production selon l'une quelconque des revendications précédentes, **caractérisé en ce qu'**il est prévu au moins une couche de barrière de diffusion contre la vapeur d'eau et/ou contre des gaz, en particulier contre les gaz qui servent pour la production de la mousse de la couche de calorifugeage (3), qui est agencée sur et/ou dans la paroi du tube intérieur (2) et/ou sur et/ou dans la couche de calorifugeage (3) et/ou sur et/ou dans la gaine de protection extérieure (5).

11. Dispositif pour la mise en oeuvre du procédé selon l'une quelconque des revendications 1 à 10, comprenant:
- un moyen permettant de préparer le tube intérieur (2);
- un moyen permettant de placer la couche de calorifugeage (3) autour du tube intérieur (2);
- un moyen permettant de placer les éléments de serrage (4) sur la surface extérieure de la couche de calorifugeage (3), dans lequel on choisit comme élément de serrage (4) une bande qui contient un matériau polymère ou qui se compose d'un matériau polymère, qui se contracte sous l'action d'une énergie, et on choisit comme matériau polymère de préférence un polyéthylène téréphtalate (PET) ou un polypropylène (PP), qui est préétiré de façon monoaxiale ou biaxiale, dans lequel le moyen pose les éléments de serrage (4) autour de la couche de calorifugeage (3) et relie l'une à l'autre les extrémités respectives des éléments de serrage respectifs (4) sous forme d'anneaux individuels; dans lequel le moyen dispose de nombreux éléments de serrage (4) sur la surface extérieure de la couche de calorifugeage (3) à des distances sensiblement égales,
- un moyen permettant de faire agir de l'énergie sur les éléments de serrage (4), afin de les contracter et de serrer la surface extérieure de la couche de calorifugeage (3).

12. Tube calorifugé (1), fabriqué par le procédé selon l'une quelconque des revendications 1 à 10.
